# EUROPÄISCHE PATENTSCHRIFT

(11) **EP 1 493 939 B1**
(45) Veröffentlichungstag und Bekanntmachung des Hinweises auf die Patenterteilung: **25.01.2006**
(21) Anmeldenummer: 04012671.6
(22) Anmeldetag: 28.05.2004
(51) Int. Cl.: F16F 9/38

(54) **Befestigung eines Schutzrohres an einer Verstellvorrichtung**
Attachment of a protective tube on an adjustment device
Fixation d'un tube de protection à un dispositif de réglage

(30) Priorität: 01.07.2003 DE 10329467
(43) Veröffentlichungstag der Anmeldung: 05.01.2005
(73) Patentinhaber: Stabilus GmbH, D-56070 Koblenz (DE)
(72) Erfinder: Fuhrmann, Castor, 56761 Brachtendorf (DE); Schilz, Arnold, 56112 Lahnstein (DE)
(74) Vertreter: Klein, Thomas

(56) Entgegenhaltungen:
- EP-A- 1 312 839
- BE-A- 669 389
- DE-U- 1 791 051
- FR-A- 2 730 714
- FR-A- 2 775 936
- US-A- 5 996 982

## Beschreibung

Die Erfindung bezieht sich auf eine Verstellvorrichtung mit einem Verstellelement, welches einen Zylinder aufweist, dessen Innenraum ein unter Druck stehendes Medium enthält, mit einem in dem Zylinder verschiebbar angeordneten Kolben, der eine Kolbenstange aufweist, die an einem ersten Ende des Zylinders axial aus dem Zylinder herausragt, mit einem am zweiten Ende des Verstellelements angeordneten Anschlußorgan, mit einem außerhalb des Verstellelements neben dem Verstellelement angeordneten Zusatzbauteil und mit einem Schutzrohr, welches im wesentlichen den Zylinder und im Bereich des Zylinders das Zusatzbauteil mit Abstand umschließt.

Verstellvorrichtungen dieser Art können Gasfedern als pneumatische Verstellelemente zur leichten Handhabung für die Kofferraumklappe bzw. die Motorhaube eines Kraftfahrzeugs sein. Das Zusatzbauteil kann beispielsweise ein Bowdenzug zum Betätigen der Verstellvorrichtung sein. Um sowohl das Verstellelement als auch das Zusatzteil zu schützen, werden das Verstellelement und das Zusatzteil von einem Schutzrohr abgedeckt. Vorrangig soll das Schutzrohr ein Verschmutzen sowie das Eindringen von Wasser und Feuchtigkeit verhindern. Darüber hinaus besitzt das Schutzrohr eine Designfunktion, indem es der Verstellvorrichtung ein kompaktes Aussehen geben soll.

Bisherige Schutzrohre wurden mittels Formschluß oder Schnappverbindungen befestigt, die unlösbar sind. Eine Demontage im Falle von Reparatur- oder Wartungsarbeiten ist somit nicht möglich. Zudem gibt es bei Schutzrohren mit Formschluß oder an konstruktiv notwendigen Durchbrüchen keine Abdichtung, so daß die Schutzfunktion für das Verstellelement und das Zusatzbauteil begrenzt ist.

Es sind weiterhin Verstellvorrichtungen bekannt, deren Schutzrohr mittels Kleber, Klebebelägen oder Kleberingen befestigt wird. Zusätzlich dient der Kleber zur Abdichtung zwischen den Bauteilen. Das Applizieren des Klebers bezüglich der Menge und der Position ist schwierig. Zudem erfordert das Reinigen der Oberflächen vor dem Auftrag des Klebers und die anschließende Positionierung einen erhöhten Aufwand. Zusätzliche Probleme treten dann auf, wenn die geklebten Teile demontiert und anschließend wiederverwendet werden sollen.

Aufgabe der Erfindung ist es, eine Verstellvorrichtung der eingangs genannten Art zu schaffen, deren Schutzrohr ohne großen Aufwand zuverlässig in seiner Position gehalten wird, wobei das Schutzrohr einfach zu montieren sein soll. Die abzudeckenden Bauteile sollen zuverlässig geschützt und hinreichend abgedichtet sein. Das Schutzrohr soll sich einfach demontieren und wiederverwenden lassen.

Diese Aufgabe wird erfindungsgemäß dadurch gelöst, daß an dem zweiten Ende des Verstellelements das eine Ende des Schutzrohrs von dem Endbereich einer topfförmigen Sicherungskappe umgeben ist, die mit ihrem einen Ende das Schutzrohr aufnimmt und mit ihrer in ihrem Boden ausgebildeten Öffnung im Bereich des Anschlußorgans angeordnet ist und dieses umschließt.

Die Anordnung des ersten Endes der Sicherungskappe über dem Schutzrohr führt zu einer Anlage der Sicherungskappe an dem Schutzrohr. Durch die dabei erreichte axiale Abstützung der Schutzkappe an dem Schutzrohr ist das Schutzrohr in seiner Lage fixiert und gegen eine ungewollte Demontage gesichert ist. Dies ermöglicht den Verzicht auf eine aufwendigen Rast- und Steckverbindung für das Schutzrohr. Ebenso kann das Fixieren mittels Klebemittel entfallen. Der Aufwand für die Herstellung der Sicherungskappe und deren Montage ist wesentlich geringer als die Herstellung einer Klebeverbindung.

Die Gestaltung der Sicherungskappe erlaubt darüber hinaus eine zusätzliche Abdichtung des Schutzrohrs, insbesondere im Bereich konstruktiv notwendiger Durchbrüche, die bisher weniger gut abgedichtet werden konnten.

Zur Verstärkung der im Boden der Sicherungskappe angeordneten Ausnehmung ist dieser Bereich als ein axial sich nach außen erstreckender Bund ausgebildet. Neben der dadurch erreichten vergrößerten Stabilität der Ausnehmung, führt die Vergrößerung der Anlagefläche zu einer erhöhten Dichtwirkung.

Zur weiteren Verbesserung der Dichtwirkung trägt es bei, wenn der Bund und das erste Ende der Sicherungskappe unter radialer Vorspannung an dem Anschlußorgan und/oder dem Schutzrohr in Anlage sind. Aufgrund der Vorspannung werden der Bund und das offene Ende mit einer bestimmten Kraft gegen das Anschlußorgan und das Schutzrohr gepreßt, so daß das Eindringen von Verschmutzungen und Feuchtigkeit weitgehend vermieden wird.

Um eine definierte Anlagefläche der Sicherungskappe an dem Schutzrohr zu erzeugen, hat sich die Anordnung einer Dichtlippe im Bereich des ersten Endes der Sicherungskappe, die an dem Schutzrohr in Anlage ist, als vorteilhaft erwiesen. Die Dichtlippe läßt sich einfach und damit kostengünstig herstellen, wenn der Rand des ersten Endes der Sicherungskappe die Dichtlippe bildet.

Die Anschlußorgane der Verstellvorrichtung können in Abhängigkeit der zu verstellenden Bauteile verschiedener Art sein. Vielfach bilden Gewindezapfen und Kugelpfannen die Anschlußorgane. Während die Montage der Sicherungskappe bei Gewindezapfen problemlos möglich ist, erschwert die Kugelpfanne aufgrund des größeren Durchmessers die Montage. Um dennoch eine Montage zu ermöglichen, wird für die Sicherungskappe ein elastischer Werkstoff, vorzugsweise ein Gummi oder ein elastischer Thermoplast, verwendet. Dadurch läßt sich die Sicherungskappe nachträglich über Bauteile mit größerem Durchmesser, wie z.B. die Kugelpfanne, montieren. Insbesondere bei Wartungs- und Reparaturarbeiten läßt sich der Aufwand für die Demontage und Montage verringern, da die Anschlußorgane nicht zwangsläufig demontiert werden müssen. Der hohe Reibwert von Gummi bewirkt gleichzeitig einen guten Reibschluß der Sicherungskappe mit anderen Bauteilen, so daß das Schutzrohr zuverlässig in seiner Lage fixiert wird.

In einer weiteren Ausgestaltung besitzt die topfförmige Sicherungskappe in ihrer etwa zylindrischen Innenwand eine radial umlaufende Nut, in die ein an der Verstellvorrichtung angeordneter Sicherungsring radial eingreift. Der beispielsweise als separates Bauteil zwischen dem zylinderseitigen Ende des Verstelletements und dem Anschlußorgan eingespannte Sicherungsring unterstützt den Halt der Sicherungskappe. Dadurch läßt sich die Anlagefläche im Bereich der Ausnehmung der Sicherungskappe verringern, so daß die Sicherungskappe in axialer Erstreckung kürzer gestaltet werden kann.
Eine vereinfachte Montage wird erreicht, wenn das dem Verstellelement zugewandte Ende des Anschlußorgans mit einem radial umlaufenden Flansch ausgebildet ist, der als Sicherungsring in die Nut der Sicherungskappe eingreift.

Zur Unterstützung der Fixierung des Schutzrohrs durch die Sicherungskappe trägt es bei, wenn zwischen dem Anschlußorgan und dem Zylinder des Verstellelements eine Scheibe eingespannt ist, die das Ende des Schutzrohrs beaufschlagt. Die Sicherungskappe umgibt dabei die Scheibe im Bereich ihres Bodens, während sie mit ihrem offenen Ende das Schutzrohr beaufschlagt. Mit der Anordnung der Scheibe wird das Schutzrohr festgeklemmt. Um große Klemmkräfte zu übertragen, besteht die Scheibe aus einem Material größerer Festigkeit als die Sicherungskappe. Hierbei hat sich Metall oder Kunststoff als geeignet erwiesen.

Eine zusätzliche Vergrößerung der Einklemmkräfte wird erreicht, wenn zusätzlich am radial äußeren Umfang der Scheibe ein Ring, vorzugsweise aus Gummi, angeordnet ist, der das Ende des Schutuohrs beaufschlagt. Eine innige Verbindung von Scheibe und Ring wird erreicht, wenn der Ring eine innenliegende, radial umlaufende Nut besitzt, mit der er die Scheibe umgibt. Sofern der Ring C-förmig ausgebildet ist, erlaubt er eine einfache und schnelle Montage und Demontage an der Scheibe ohne zusätzliche Hilfsmittel.

Anstelle des die Scheibe umschließenden Rings, ist die Anordnung einer zweiten Scheibe denkbar. Hierbei ist die erste Scheibe zwischen dem Anschlußorgan und dem Zylinder des Verstellelements eingespannt. In dieser Position beaufschlagt sie die zweite Scheibe, die infolgedessen das Ende des Schutzrohrs einklemmt. Die zweite Scheibe kann aus Kunststoff oder Metall bestehen.

Ausführungsbeispiele der Erfindung sind in der Zeichnung dargestellt und werden im folgenden näher beschrieben. Es zeigen
- Figur 1:: eine Seitenansicht einer Verstellvorrichtung im Schnitt
- Figur 2:: eine teilweise geschnittene Halbdarstellung des zylinderseitigen Endes der Verstellvorrichtung nach Figur 1
- Figur 3:: eine zweite Ausführungsform der Verstellvorrichtung nach Figur 2 in einer teilweise geschnittenen Halbdarstellung
- Figur 4:: eine dritte Ausführungsform der Verstellvorrichtung nach Figur 2 in einer teilweise geschnittenen Halbdarstellung
- Figur 5:: eine zweite Ausführungsform der Verstellvorrichtung nach Figur 4 in einer teilweise geschnittenen Halbdarstellung
- Figur 6:: eine weitere Ausführungsform der Verstellvorrichtung nach Figur 2 in einer teilweise geschnittenen Halbdarstellung

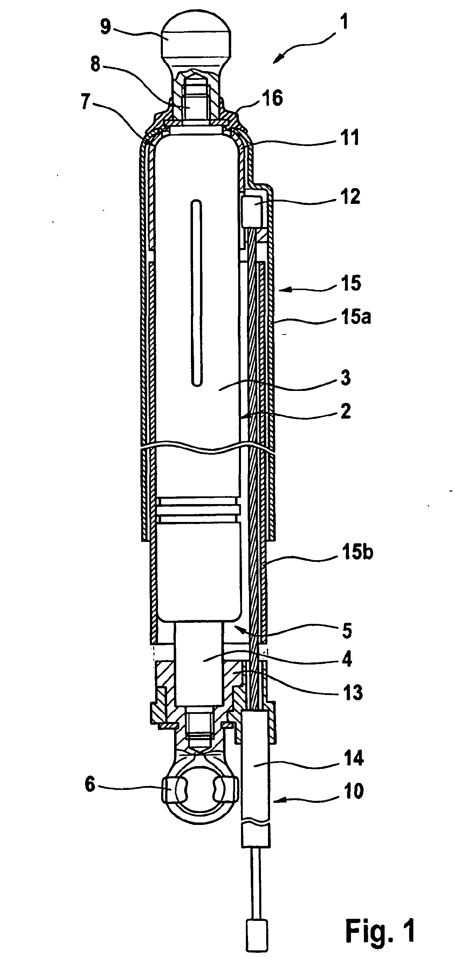

Figur 1 zeigt eine Verstellvorrichtung 1 mit einem Verstellelement 2. Das Verstellelement 2 besteht aus einem Zylinder 3, dessen Innenraum ein unter Druck stehendes Medium enthält. In dem Zylinder 3 ist ein nicht dargestellter Kolben verschiebbar angeordnet. An dem Kolben ist eine Kolbenstange 4 befestigt, die an einem ersten Ende 5 des Zylinders 3 aus diesem herausragt. Das aus dem Zylinder ragende Ende der Kolbenstange 4 ist mit einem als Kugelpfanne ausgebildeten Anschlußorgan 6 verbunden, über das sich die Verstellvorrichtung 1 an einem nicht dargestellten, zu verstellenden Bauteil verbinden läßt. An dem zweiten Ende 7 des Verstellelements 2 ist ein Zapfen 8 angeordnet, an dem ein als Kugelpfanne ausgebildetes Anschlußorgan 9 befestigt ist. Mit dem Anschlußorgan 9 läßt sich die Verstellvorrichtung 1 an einem zweiten Bauteil anschlagen.

Neben dem Verstellelement 2 weist die Verstellvorrichtung 1 einen Bowdenzug 10 als Zusatzbauteil auf. Der Bowdenzug 10 dient zum Verstellen des Verstellelements 2. Um den Bowdenzug 10 mit dem Verstellelement 2 zu verbinden, ist am zweiten Ende 7 des Verstellelements 2 ein Halter 11 aufgesetzt. Das Zugende 12 des Bowdenzugs 10 ist in einem Halter 11 eingehängt. Das Anschlußorgan 6 der Kolbenstange 4 besitzt eine Halterung 13 zur Fixierung der Hülle 14 des Bowdenzugs 10.

Ein Schutzrohr 15 ist derart an der Verstellvorrichtung 1 angeordnet, daß es das Verstellelement 2 und den Bowdenzug 10 im Bereich des Zylinders 3 abdeckt. Das Schutzrohr 15 besteht aus zwei Teilen 15a, 15b, die einander überlappend angeordnet sind. An dem zweiten Ende 7 besitzt das Schutzrohr 15 einen konstruktiv bedingten Durchbruch für den Zapfen 8. Das Schutzrohr 15 liegt in diesem Bereich an der Kontur des Halters 11 und dieser an der Kontur des Zylinders 3 an.

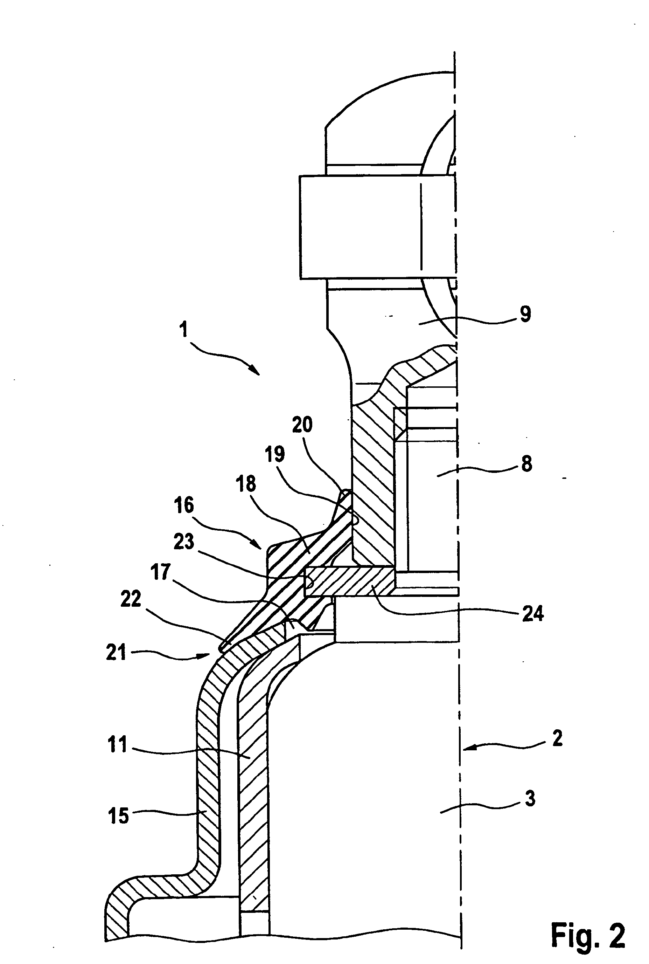

Im Bereich des Anschlußorgans 9 ist eine topfförmige Sicherungskappe 16 über dem Schutzrohr 15 angeordnet, die das Schutzrohr 15 in seiner Lage fixiert. Der Aufbau der Sicherungskappe ist in Figur 2 erläutert.

Figur 2 zeigt den Zylinder 3 des Verstellelements 2 mit dem Halter 11 für den nicht dargestellten Bowdenzug 10. Das Schutzrohr 15 ist über dem Halter 11 angeordnet. Im Bereich des Zapfens 8 besitzt das Schutzrohr 15 eine Rohröffnung 17.

Die topfförmige Sicherungskappe 16 ist derart an der Verstellvorrichtung 1 angeordnet, daß sie das Ende des Schutzrohrs 15 im Bereich der Rohröffnung 17 abdeckt. Dazu weist die Sicherungskappe 16 in ihrem Boden 18 eine Ausnehmung 19 auf. Der Boden 18 geht im Bereich der Ausnehmung 19 in einen sich nach außen erstreckenden Bund 20 über. Mit dem die Ausnehmung 19 umgebenden Bereich liegt die Sicherungskappe 16 am Anschlußorgan 9 an. Die große Anlagefläche des die Ausnehmung 19 umgebenden Bereichs und die durch den Bund 20 bewirkte Vorspannung gewährleisten eine gute Abdichtung gegen den Eintritt von Schmutz und Feuchtigkeit.

Das erste Ende 21 der Sicherungskappe 16 ist mit einem kleineren Durchmesser als das Schutzrohr 15 in diesem Bereich ausgebildet, so daß das erste Ende 21 unter Vorspannung am Schutzrohr 15 anliegt. Das spitz auslaufende, erste Ende 21 bildet eine Dichtlippe 22, die im Zusammenwirken mit der Vorspannung das Eindringen von Schmutz und Feuchtigkeit verhindert.

Die Sicherungskappe 16 besteht aus EPDM. Der Gummi gewährleistet eine hohe Pressung zwischen dem Bereich um die Ausnehmung 19 und dem Anschlußorgan 9, sowie dem ersten Ende 21 und dem Schutzrohr 15. Während die Pressung des Bereichs um die Ausnehmung 19 mit dem Anschlußorgan 9 zum Halten der Sicherungskappe 16 dient, wird das Schutzrohr 15 von dem ersten Ende 21 in seiner Lage fixiert. Die Vorspannung der Sicherungskappe 16 verstärkt die Pressung.

Femer besitzt die topfförmige Sicherungskappe 16 an ihrer inneren zylindrischen Mantelfläche eine radial umlaufende Nut 23, in die ein Sicherungsring 24 aus Metall mit seinem radial äußeren Bereich eingreift. Der Sicherungsring 24 ist zwischen dem Zylinder 3 und dem auf den Zapfen 8 aufgeschraubten Anschlußorgan 9 eingespannt und dient der zusätzlichen Lagefixierung der Sicherungskappe 16.

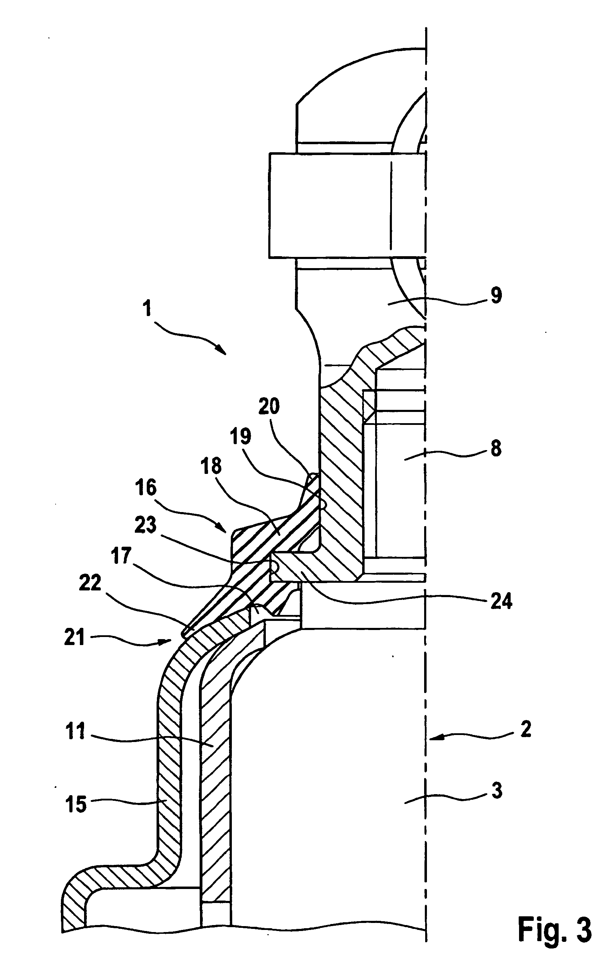

Eine leicht abgewandelte Ausführungsform der Verstellvorrichtung 1 aus Figur 2 ist in Figur 3 dargestellt. In dieser Ausführungsform ist der Sicherungsring kein separates Bauteil, sondern als Flansch 24 am Anschlußorgan 9 einteilig angeformt.

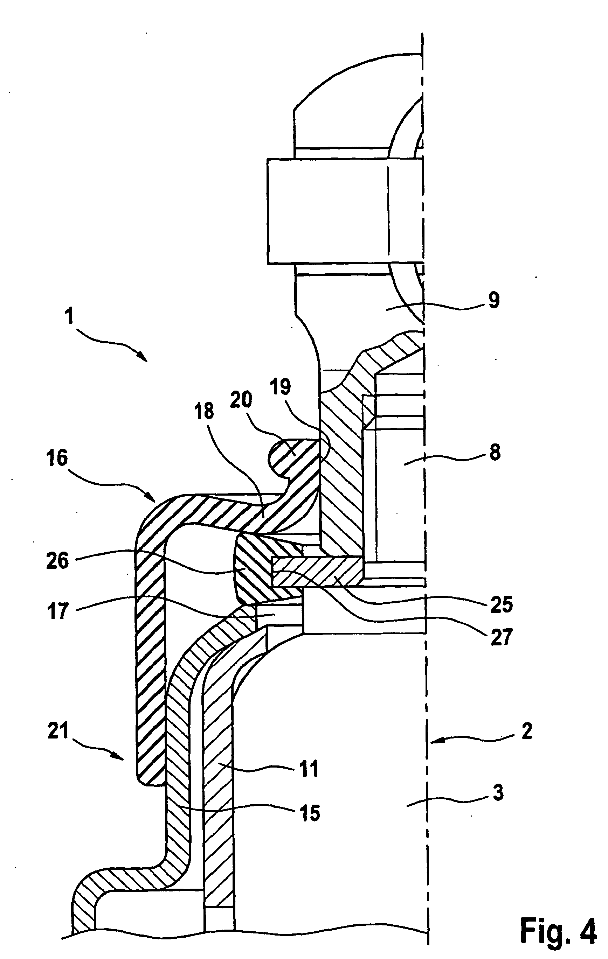

Die topfförmige Sicherungskappe 16 der Verstellvorrichtung 1 nach Figur 4 besitzt gegenüber Figur 2 einen leicht veränderten Aufbau. Zwischen dem Zylinder 3 und dem auf den Zapfen 8 aufgeschraubten Anschlußorgan 9 ist eine Scheibe 25 eingespannt. Ein C-förmiger Ring 26 aus Gummi, der im Bereich seiner Bohrung eine Ringnut 27 besitzt, ist auf den radial äußeren Bereich der Scheibe 25 aufgesetzt. Im montierten Zustand klemmt der Ring 26 das Schutzrohr 15 und unterstützt dadurch die Fixierung des Schutzrohrs 15. Die mit ihrer Bohrung 19 am Anschlußorgan 9 und mit ihrem ersten Ende 21 am Schutzrohr 15 anliegende Sicherungskappe 16 ist über dem Ring 26 angeordnet.

Die C-förmige Ausbildung des Rings 26 führt zu einer vereinfachten Montage und Demontage an der Scheibe 25. Die Gestaltung der Scheibe 25 mit einem kleineren Durchmesser als der Rohröffnung 17 des Schutzrohrs 15, erlaubt das Abziehen des Schutzrohrs 15, ohne daß die Scheibe 25 entfernt werden muß.

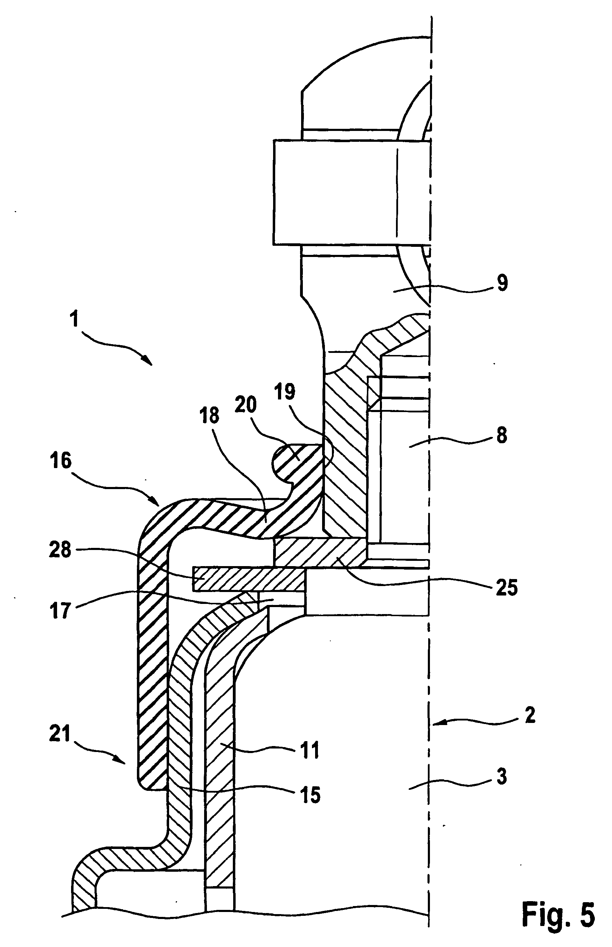

In einer weiteren Ausführungsform in Figur 5 ist eine zweite Scheibe 28 zwischen der ersten Scheibe 25 und dem Zylinder 3 angeordnet, wobei die zweite Scheibe 28 die erste Scheibe 25 als Anschlag nutzt. Mit ihrer der ersten Scheibe 25 abgewandten Seite klemmt die zweite Scheibe 28 das Schutzrohr 15 im Bereich des Durchbruchs 17. Sie unterstützt damit die axiale Fixierung des Schutzrohrs 15 durch die Sicherungskappe 16. Die Sicherungskappe 16 deckt beide Scheiben 25, 28 ab. Mit ihrem Boden 18 liegt die Sicherungskappe 16 auf der dem Anschlußorgan 9 zugewandten Seite der ersten Scheibe 25 an.

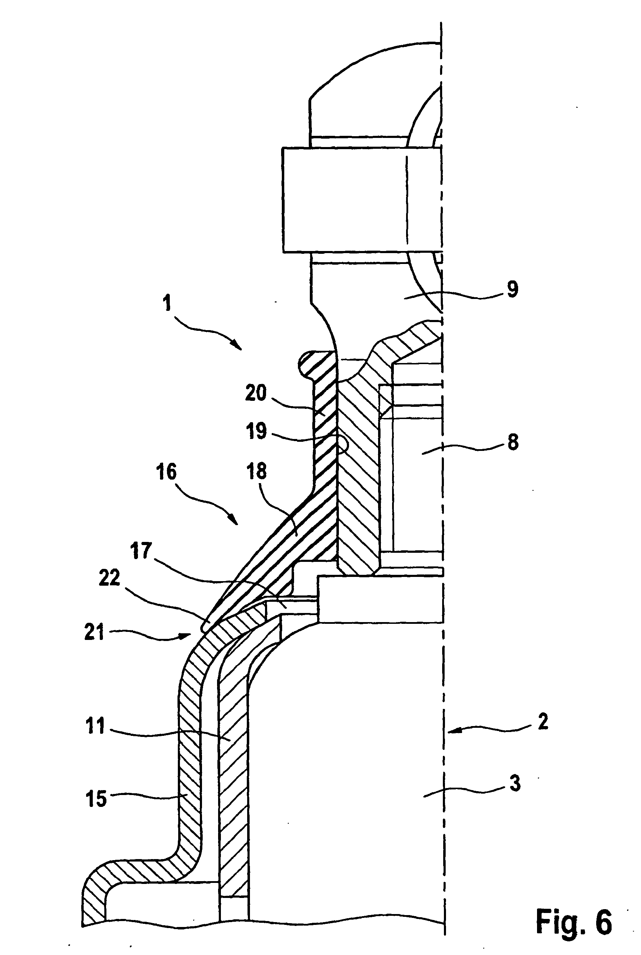

Figur 6 zeigt die Verstellvorrichtung 1, wobei im Bereich der Sicherungskappe 16 keine zusätzlichen Sicherungsringe oder Scheiben angeordnet sind. Die Sicherungskappe 16 weist einen in axialer Erstreckung verlängerten Bund 20 auf. Die dadurch verlängerte Ausnehmung 19 liegt mit einer sehr großen Anlagefläche am Anschlußorgan 9 an. Die Anlagefläche bewirkt einen ausreichenden starken Reibschluß, der die Sicherungskappe 16 in dieser Position hält, so daß die Sicherungskappe 16 das Schutzrohr 15 zuverlässig in seiner Lage fixiert.

### Bezugszeichenliste

- 1 -: Verstellvorrichtung
- 2 -: Verstellelement
- 3 -: Zylinder
- 4 -: Kolbenstange
- 5 -: erstes Ende
- 6 -: Anschlußorgan
- 7 -: zweites Ende
- 8 -: Zapfen
- 9 -: Anschlußorgan
- 10 -: Bowdenzug
- 11 -: Halter
- 12 -: Zugende
- 13 -: Halterung
- 14 -: Hülle
- 15 -: Schutzrohr
- 15a, b-: Schutzrohrteil
- 16 -: Sicherungskappe
- 17 -: Rohröffnung
- 18 -: Boden
- 19. -: Ausnehmung
- 20 -: Bund
- 21 -: erstes Ende
- 22 -: Dichtlippe
- 23 -: Nut
- 24 -: Sicherungsring
- 25 -: erste Scheibe
- 26 -: Ring
- 27 -: Ringnut
- 28 -: zweite Scheibe

## Patentansprüche

1. Verstellvorrichtung (1) mit einem Verstellelement (2), welches einen Zylinder (3) aufweist, dessen Innenraum ein unter Druck stehendes Medium enthält, mit einem in dem Zylinder (3) verschiebbar angeordneten Kolben, der eine Kolbenstange (4) aufweist, die an einem ersten Ende (5) des Zylinders (3) axial aus dem Zylinder (2) herausragt, mit einem am zweiten Ende (7) des Verstellelements (2) angeordneten Anschlußorgan (9), mit einem außerhalb des Verstellelements (2) neben dem Verstellelement (2) angeordneten Zusatzbauteil und mit einem Schutzrohr (15), welches im wesentlichen den Zylinder (3) und im Bereich des Zylinders (3) das Zusatzbauteil (11,12) mit Abstand umschließt, **dadurch gekennzeichnet, daß** an dem zweiten Ende (7) des Verstellelements (2) das eine Ende des Schutzrohrs (15) von dem Endbereich einer topfförmigen Sicherungskappe (16) umgeben ist, die mit ihrem einen Ende (21) das Schutzrohr (15) aufnimmt und mit ihrer in ihrem Boden (18) ausgebildeten Öffnung (19) im Bereich des Anschlußorgans (9) angeordnet ist und dieses umschließt.

2. Verstellvorrichtung nach Anspruch 1, **dadurch gekennzeichnet, daß** der Boden (18) im Bereich der Ausnehmung (19) einen axial nach außen vorstehenden Bund (20) aufweist.

3. Verstellvorrichtung nach einem der vorhergehenden Ansprüche, **dadurch gekennzeichnet, daß** der Bund (20) und das erste Ende (21) der Sicherungskappe (16) unter radialer Vorspannung an dem Anschlußorgan (9) und/oder dem Schutzrohr (15) in Anlage ist.

4. Verstellvorrichtung nach einem der vorstehenden Ansprüche, **dadurch gekennzeichnet, daß** zumindest das erste Ende (21) der Sicherungskappe (16) mindestens eine radial umlaufende Dichtlippe (22) aufweist, die an dem Schutzrohr (15) in Anlage ist.

5. Verstellvorrichtung nach einem der vorhergehenden Ansprüche, **dadurch gekennzeichnet, daß** die Sicherungskappe (16) aus einem Gummi, vorzugsweise EPDM, oder einem Kunststoff, vorzugsweise einem elastischen Thermoplast, besteht.

6. Verstellvorrichtung nach einem der vorhergehenden Ansprüche, **dadurch gekennzeichnet, daß** die Sicherungskappe (16) in ihrer etwa zylindrischen Innenwand eine radial umlaufende Nut (23) besitzt, in die ein mit dem Anschlußorgan (9) und/oder dem Zylinder (3) verbundener Sicherungsring (24) radial eingreift.

7. Verstellvorrichtung nach Anspruch 6, **dadurch gekennzeichnet, daß** der Sicherungsring (24) als Flansch einteilig am Anschlußorgan (9) angeformt ist.

8. Verstellvorrichtung nach einem der Ansprüche 1 bis 5, **dadurch gekennzeichnet, daß** an dem Anschlußorgan (9) und/oder dem Zylinder (3) eine radial hervorragende erste Scheibe (25) angeordnet ist, durch die das Schutzrohr (15) im Bereich seiner Rohröffnung (17) axial beaufschlagt ist, und daß die Sicherungskappe (16) mit ihrem Boden (18) die erste Scheibe (25) axial und im Bereich ihres ersten Endes (21) das Schutzrohr (15) radial umschließend beaufschlagt.

9. Verstellvorrichtung nach Anspruch 8, **dadurch gekennzeichnet, daß** die erste Scheibe (25) von einem Ring (26) umschlossen ist, der eine innenliegende radial umlaufende Nut (27) aufweist, in die die erste Scheibe (25) mit ihrem radial äußeren Bereich eingreift und daß die erste Scheibe (25) das Schutzrohr (15) im Bereich der Rohröffnung (17) über den Ring (26) axial beaufschlagt.

10. Verstellvorrichtung nach Anspruch 9, **dadurch gekennzeichnet, daß** der Ring (26) C-förmig ausgebildet ist.

11. Verstellvorrichtung nach Anspruch 9 und 10, **dadurch gekennzeichnet, daß** der Ring (26) aus einem Kunststoff oder einem Gummi besteht.

12. Verstellvorrichtung nach einem der Ansprüche 1 bis 5, **dadurch gekennzeichnet, daß** an dem Anschlußorgan (9) und/oder dem Zylinder (3) eine radial hervorragende erste Scheibe (25) und zwischen der ersten Scheibe (25) und dem Zylinder (3) eine radial hervorragende zweite Scheibe (28) angeordnet ist, durch die das Schutzrohr (15) im Bereich seiner Rohröffnung (17) axial beaufschlagt ist, und daß die Sicherungskappe (16) mit ihrem Boden (18) die erste Scheibe (25) axial und im Bereich ihres ersten Endes (21) das Schutzrohr (15) radial umschließend beaufschlagt.

13. Verstellvorrichtung nach einem der vorhergehenden Ansprüche, **dadurch gekennzeichnet, daß** der Sicherungsring (24), die erste Scheibe (25) und die zweite Scheibe (28) aus einem Material höherer Festigkeit als die Sicherungskappe (16), vorzugsweise einem Metall oder Kunststoff, bestehen.

## Claims

1. Adjustment device (1) with an adjustment element (2), which has a cylinder (3), the inner space of which contains a medium under pressure, with a piston, which is arranged displaceably in the cylinder (3) and has a piston rod (4), which protrudes axially out of the cylinder (3) at a first end (5) of the cylinder (3), with a connecting member (9), which is arranged at a second end (7) of the adjustment element (2), with an additional component, which is arranged outside the adjustment element (2) alongside the adjustment element (2), and with a protective tube (15), which essentially encloses the cylinder (3) and, in the region of the cylinder (3), the additional component (11, 12) with a spacing, **characterized in that**, at the second end (7) of the adjustment element (2), the one end of the protective tube (15) is surrounded by the end region of a cup-shaped safety cap (16), which receives with its one end (21) the protective tube (15) and is arranged with its opening (19), formed in its base (18), in the region of the connecting member (9) and encloses the latter.

2. Adjustment device according to Claim 1, **characterized in that** the base (18) has in the region of the clearance (19) an axially outwardly projecting collar (20).

3. Adjustment device according to one of the preceding claims, **characterized in that** the collar (20) and the first end (21) of the safety cap (16) lie under radial prestress against the connecting member (9) and/or the protective tube (15).

4. Adjustment device according to one of the preceding claims, **characterized in that** at least the first end (21) of the safety cap (16) has at least one radially peripheral sealing lip (22), which lies against the protective tube (15).

5. Adjustment device according to one of the preceding claims, **characterized in that** the safety cap (16) consists of a rubber, preferably EPDM, or a plastic, preferably an elastic thermoplastic.

6. Adjustment device according to one of the preceding claims, **characterized in that** the safety cap (16) has in its approximately cylindrical inner wall a radially peripheral groove (23), in which there radially engages a retaining ring (24), connected to the connecting member (9) and/or the cylinder (3).

7. Adjustment device according to Claim 6, **characterized in that** the retaining ring (24) is formed integrally on the connecting member (9) as a flange.

8. Adjustment device according to one of Claims 1 to 5, **characterized in that** a radially protruding first disc (25) is arranged on the connecting member (9) and/or the cylinder (3), by which disc the protective tube (15) is acted on axially in the region of its tube opening (17), and **in that** the safety cap (16) acts with its base (18) axially on the first disc (25) and, in the region of its first end (21), radially on the protective tube (15) in an enclosing manner.

9. Adjustment device according to Claim 8,
**characterized in that** the first disc (25) is enclosed by a ring (26), which has an inner radially peripheral groove (27), in which the first disc (25) engages with its radially outer region, and **in that** the first disc (25) acts axially on the protective tube (15) in the region of the tube opening (17) via the ring (26).

10. Adjustment device according to Claim 9,
**characterized in that** the ring (26) is formed in a C-shaped manner.

11. Adjustment device according to Claims 9 and 10, **characterized in that** the ring (26) consists of a plastic or a rubber.

12. Adjustment device according to one of Claims 1 to 5, **characterized in that** a radially protruding first disc (25) is arranged on the connecting member (9) and/or the cylinder (3) and a radially protruding second disc (28) is arranged between the first disc (25) and the cylinder (3), by which discs the protective tube (15) is acted on axially in the region of its tube opening (17), and **in that** the safety cap (16) acts with its base (18) axially on the first disc (25) and, in the region of its first end (21), radially on the protective tube (15) in an enclosing manner.

13. Adjustment device according to one of the preceding claims, **characterized in that** the retaining ring (24), the first disc (25) and the second disc (28) consist of a material of higher strength than the safety cap (16), preferably a metal or plastic.

## Revendications

1. Dispositif de réglage (1) avec un élément de réglage (2) lequel présente un cylindre (3) dont l'espace intérieur contient un fluide sous pression avec un piston disposé de manière à pouvoir coulisser dans le cylindre (3) et qui présente une tige de piston (4) qui, au niveau d'une première extrémité (5) du cylindre (3), déborde axialement hors du cylindre (3), avec un organe de raccordement (9) disposé sur la deuxième extrémité (7) de l'élément de réglage (2), avec un composant supplémentaire disposé à côté et à l'extérieur de l'élément de réglage (2) et avec un tube protecteur (15) lequel, pour l'essentiel, enveloppe avec un certain écartement le cylindre (3) et, au niveau du cylindre (3), le composant supplémentaire (11, 12), **caractérisé en ce que**, sur la deuxième extrémité (7) de l'élément de réglage (2) une extrémité du tube protecteur (15) est entourée par la zone terminale d'un capuchon de sécurité (16) en forme de cuvette qui, par une de ses extrémités (21), loge le tube protecteur (15) et qui, par son ouverture (19) réalisée dans son fond (18), est disposé au niveau de l'organe de raccordement (9) et enveloppe ce dernier.

2. Dispositif de réglage selon la revendication 1, **caractérisé en ce que** le fond (18) présente, au niveau de l'évidement (19), un collet (20) débordant axialement vers l'extérieur.

3. Dispositif de réglage selon l'une quelconque des revendications précédentes, **caractérisé en ce que** le collet (20) et la première extrémité (21) du capuchon de sécurité (16) sont en contact, moyennant précontrainte radiale, avec l'organe de raccordement (9) et/ou le tube protecteur (15).

4. Dispositif de réglage suivant l'une quelconque des revendications précédentes, **caractérisé en ce qu'**au moins la première extrémité (21) du capuchon de sécurité (16) présente au moins une lèvre d'étanchéité (22) périphérique qui est en contact avec le tube protecteur (15).

5. Dispositif de réglage suivant l'une quelconque des revendications précédentes, **caractérisé en ce que** le capuchon de sécurité (16) est fabriqué en caoutchouc, de préférence de l'EPDM, ou en matière plastique, de préférence un thermoplastique élastique.

6. Dispositif de réglage suivant l'une quelconque des revendications précédentes, **caractérisé en ce que** le capuchon de sécurité (16) comporte, sur sa paroi intérieure pratiquement cylindrique, une gorge périphérique (23) dans laquelle s'engage radialement un circlip (24) associé à l'organe de raccordement (9) et/ou au cylindre (3).

7. Dispositif de réglage selon la revendication 6, **caractérisé en ce que** le circlip (24) est formé en tant que bride d'une seule pièce sur l'organe de raccordement (9).

8. Dispositif de réglage selon l'une quelconque des revendications 1 à 5, **caractérisé en ce qu'**une première rondelle (25) débordant radialement est disposée sur l'organe de raccordement (9) et/ou le cylindre (3), rondelle par laquelle le tube protecteur (15) est actionné axialement au niveau de son ouverture tubulaire (17) et **en ce que** le capuchon de sécurité (16) actionne axialement la première rondelle (25) par son fond (18) et actionne, de manière périphérique, au niveau de sa première extrémité (21), le tube protecteur (15).

9. Dispositif de réglage selon la revendication 8, **caractérisé en ce que** la première rondelle (25) est entourée d'un anneau (26) qui présente une gorge périphérique (27) radiale intérieure dans laquelle la première rondelle (25) s'engage par sa zone radialement extérieure et **en ce que** la première rondelle (25) actionne axialement le tube protecteur (15) au niveau de l'ouverture tubulaire (17) via l'anneau (26).

10. Dispositif de réglage selon la revendication 9, **caractérisé en ce que** l'anneau (26) est réalisé en forme de C.

11. Dispositif de réglage selon les revendications 9 et 10, **caractérisé en ce que** l'anneau (26) est fabriqué en matière plastique ou en caoutchouc.

12. Dispositif de réglage selon l'une quelconque des revendications 1 à 5, **caractérisé en ce qu'**une première rondelle (25) débordant radialement est disposée sur l'organe de raccordement (9) et/ou le cylindre (3) et une deuxième rondelle (28) débordant radialement est disposée entre la première rondelle (25) et le cylindre (3), deuxième rondelle par laquelle le tube protecteur (15) est actionné axialement au niveau de son ouverture tubulaire (17) et **en ce que** le capuchon de sécurité (16) actionne axialement la première rondelle (25) par son fond (18) et actionne radialement de manière périphérique, au niveau de sa première extrémité (21), le tube protecteur (15).

13. Dispositif de réglage suivant l'une quelconque des revendications précédentes, **caractérisé en ce que** le circlip (24), la première rondelle (25) et la deuxième rondelle (28) sont fabriqués en un matériau de plus haute résistance que le capuchon de sécurité (16), de préférence en métal ou en matière plastique.
